# EUROPEAN PATENT APPLICATION

(11) **EP 1 816 163 A1**
(43) Date of publication of application: **08.08.2007**
(21) Application number: 05811307.7
(22) Date of filing: 25.11.2005
(51) Int. Cl.: C08L 33/06, C08L 101/00, C08K 5/10, C08L 83/05

(54) **THERMOPLASTIC ELASTOMER COMPOSITION AND METHOD FOR PRODUCING SAME**

(30) Priority: 26.11.2004 JP 2004342013
(71) Applicant: JSR Corporation, Tokyo 104-8410 (JP)
(72) Inventor: KANAE, Kentarou, Chuo-ku, Tokyo;1048410 (JP); KOBAYASHI, Masato, Chuo-ku, Tokyo;1048410 (JP); MAEDA, Minoru, Chuo-ku, Tokyo;1048410 (JP); TOYOSHIMA, Tsukasa, Chuo-ku, Tokyo;1048410 (JP); TSUNEYOSHI, Minoru, Chuo-ku, Tokyo;1048410 (JP)
(74) Representative: TBK-Patent
(86) International application number: PCT/JP2005/022129
(87) International publication number: WO 2006/057445

(57) **Abstract**

A thermoplastic elastomer composition obtained by dynamically heat-treating a mixture containing a thermoplastic resin (A) having a melting point of not less than 200°C and an elastomer (B) having a constitutional unit derived from an ester group-containing monomer in the presence of, as a crosslinking agent (C), a polymer (C-1) comprising a (meth)acrylate (c-1) unit having a weight average molecular weight (Mw) of 1,000 to 30,000 and a molecular weight distribution (Mw/Mn) of 1.0 to 4.0 and/or a polymer (C-2) which comprises 5 to 35 mass% of the (meth)acrylate (c-1) unit and 65 to 95 mass% of an aromatic vinyl monomer (c-2) unit, the polymer (C-2) having a weight average molecular weight (Mw) of 1,000 to 30,000 and a molecular weight distribution (Mw/Mn) of 1.0 to 4.0. The composition has a good sea-island structure as a whole and excellent cold resistance, and is useful as a substitute for acrylic rubbers.

## Description

### TECHNICAL FIELD

The present invention relates to a thermoplastic elastomer composition and a method for producing the same. More particularly, the present invention relates to a thermoplastic elastomer composition having a good sea-island structure as a whole and useful as a substitute for an acrylic rubber and a method for producing the same.

### BACKGROUND ART

As a polymer material excelling in pliability and rubber elasticity, thermoplastic elastomer compositions have been widely used in addition to rubber materials. The thermoplastic elastomer compositions can be molded into formed products by common methods of molding thermoplastic resin such as injection molding, contour extrusion molding, calender processing, and blow molding. In recent years, the demand of thermoplastic elastomer compositions as a substitute for a vulcanized rubber and a vinyl chloride resin in vehicle parts, industrial goods, electric and electronic parts, building materials, and the like from the viewpoint of energy saving, resource saving, and recycling is increasing.

However, thermoplastic elastomer compositions have a number of problems still to be solved such as a complicated production process, high cost of the crosslinking agents which can be used, and limited use of the products due to pollution caused by the crosslinking agent used and the like.

As a related art, a thermoplastic elastomer composition obtained by kneading or heat treatment at 180 to 350°C having a sea-island structure in which vulcanized rubber particles of an acrylic rubber are dispersed in a thermoplastic copolyester elastomer matrix and a method for producing the thermoplastic elastomer composition have been disclosed (see, for example, Patent Document 1). In the production method disclosed in Patent Document 1, a compound known as a common crosslinking agent, such as an aliphatic polycarboxylic acid, an aromatic polycarboxylic acid, or an anhydride of these polycarboxylic acids, is used as the crosslinking agent.

A common crosslinking agent is known to be used at a temperature in a range from 150 to 200°C. For this reason, when a raw material mixture containing a thermoplastic resin with a melting point of 200°C or more is heated at a temperature higher than 200°C for crosslinking in the production of a thermoplastic elastomer composition, the crosslinking agent instantaneously reacts and a thermoplastic elastomer composition having a good sea-island structure cannot be obtained. Therefore, development of a method for producing a thermoplastic elastomer composition in which dynamic crosslinking can be carried out in a stable state even if a thermoplastic resin with a high melting point is used as the matrix and which can produce a thermoplastic elastomer composition having a good sea-island structure as a whole is desired.
[Patent Document 1] Japanese Patent Application Laid-open No. 9-272788

### DISCLOSURE OF THE INVENTION

The present invention has been achieved in view of such problems in the related art and has an object of providing a thermoplastic elastomer composition useful as a substitute for an acrylic rubber which has a good sea-island structure as a whole and has excellent cold resistance, and an object of providing a method for producing a thermoplastic elastomer composition useful as a substitute for an acrylic rubber which can be dynamically crosslinked in a stable manner in the presence of a thermoplastic resin with a comparatively high melting point, has a good sea-island structure as a whole, and has excellent cold resistance.

As a result of extensive studies in order to attain these object, the inventors of the present invention have found that this object can be achieved by using a specific polymer as a crosslinking agent when a mixture containing a specific thermoplastic resin and an elastomer is dynamically treated with heat using a crosslinking agent. This finding has led to the completion of the present invention.

Specifically, the following thermoplastic elastomer compositions and methods for producing the thermoplastic elastomer compositions are provided according to the present invention.

[1] A thermoplastic elastomer composition obtained by dynamically heat-treating a mixture containing a thermoplastic resin (A) having a melting point of not less than 200°C and an elastomer (B) having a constitutional unit derived from an ester group-containing monomer in the presence of, as a crosslinking agent (C), a polymer (C-1) which consists of a (meth)acrylate (c-1) unit having a weight average molecular weight (Mw) of 1,000 to 30,000 and a molecular weight distribution (Mw/Mn) of 1.0 to 4.0 and/or a polymer (C-2) which comprises 5 to 35 mass% of the (meth)acrylate (c-1) unit and 65 to 95 mass % of an aromatic vinyl monomer (c-2) unit, the polymer (C-2) having a weight average molecular weight (Mw) of 1,000 to 30,000 and a molecular weight distribution (Mw/Mn) of 1.0 to 4.0.

[2] The thermoplastic elastomer composition according to [1], wherein the thermoplastic resin (A) is at least one polymer selected from the group consisting of a polyester resin, a polyamide resin, and a polyester elastomer.

[3] The thermoplastic elastomer composition according to [1] or [2], wherein the elastomer (B) is at least one rubber selected from the group consisting of an acrylic rubber, an acrylonitrile-acrylic rubber, and an ethylene acrylic rubber.

[4] The thermoplastic elastomer composition according to any one of [1] to [3], wherein the elastomer (B) comprises 20 to 99.99 mass% of a constitutional unit (B1) derived from an alkyl acrylate monomer and/or an alkoxyalkyl acrylate monomer, 0.01 to 20 mass% of a constitutional unit (B2) derived from a monomer having a carbon-carbon double bond in the side chain, 0 to 40 mass% of a constitutional unit (B3) derived from an unsaturated acrylonitrile monomer, and 0 to 30 mass% of a constitutional unit (B4) derived from a monomer copolymerizable with these monomers, provided that (B1) + (B2) + (B3) + (B4) = 100 mass%.

[5] The thermoplastic elastomer composition according to any one of [1] to [4], wherein the elastomer (B) is a carboxylated elastomer, a hydroxylated elastomer, an aminated elastomer, or an epoxidized elastomer.

[6] The thermoplastic elastomer composition according to any one of [1] to [5], wherein the ratio by mass of the thermoplastic resin (A) and the elastomer (B) is A:B = 60:40 to 15:85.

[7] The thermoplastic elastomer composition according to any one of [1] to [6], wherein the (meth)acrylate (c-1) contains glycidyl methacrylate.

[8] The thermoplastic elastomer composition according to any one of [1] to [7], wherein the epoxide content of the crosslinking agent (C) is 0.1 to 20 meq/g.

[9] The thermoplastic elastomer composition according to any one of [1] to [8], wherein the mixture which is dynamically treated with heat further comprises methyl hydrogen silicone oil.

[10] The thermoplastic elastomer composition according to any one of [1] to [9], further comprising 0 to 50 mass% of a plasticizer selected from the group consisting of an ether-based plasticizer, an ether ester-based plasticizer, and a trimellitic acid-based plasticizer.

[11] A formed product obtained by molding the thermoplastic elastomer composition according to any one of [1] to [10].

[12] A constant velocity joint (CVJ) boot made from the thermoplastic elastomer composition according to any one of [1] to [10].

[13] A method for producing a thermoplastic elastomer composition comprising dynamically heat-treating a mixture containing a thermoplastic resin (A) having a melting point of not less than 200°C and an elastomer (B) having a constitutional unit derived from an ester group-containing monomer in the presence of, as a crosslinking agent (C), a polymer (C-1) which consists of a (meth)acrylate (c-1) unit having a weight average molecular weight (Mw) of 1,000 to 30,000 and a molecular weight distribution (Mw/Mn) of 1.0 to 4.0 and/or a polymer (C-2) which comprises 5 to 35 mass% of the (meth)acrylate (c-1) unit and 65 to 95 mass % of an aromatic vinyl monomer (c-2) unit, the polymer (C-2) having a weight average molecular weight (Mw) of 1,000 to 30,000 and a molecular weight distribution (Mw/Mn) of 1.0 to 4.0.

[14] The method for producing a thermoplastic elastomer composition according to [13], wherein the mixture is dynamically treated with heat using a continuous kneader and/or a continuous extruder.

The thermoplastic elastomer composition of the present invention has a good sea-island structure as a whole, has excellent cold resistance, and is useful as a substitute for an acrylic rubber. According to the method for producing the thermoplastic elastomer composition of the present invention, dynamic crosslinking can be carried out in a stable state even if a thermoplastic resin with a high melting point is present, whereby a thermoplastic elastomer composition having a good sea-island structure as a whole and has excellent cold resistance can be produced.

### BRIEF DESCRIPTION OF THE DRAWINGS

Figure 1 is an electron microscope photograph showing a microstructure of the thermoplastic elastomer composition of Example 1.
Figure 2 is an electron microscope photograph showing a microstructure of the thermoplastic elastomer composition of Comparative Example 2.

### BEST MODE FOR CARRYING OUT THE INVENTION

A preferred embodiment of the present invention is described below. However, it should be understood that the present invention is not limited to the following embodiment, but includes various modifications and improvements made based on the knowledge of a person having an ordinary skill in the art, to the extent not departing from the gist of the invention.

One embodiment of the thermoplastic elastomer composition is a method of production comprising dynamically heat-treating a mixture containing a thermoplastic resin (A) having a melting point of not less than 200°C and an elastomer (B) having a constitutional unit derived from an ester group-containing monomer in the presence of, as a crosslinking agent (C), a polymer (C-1) which consists of a (meth)acrylate (c-1) unit having a weight average molecular weight (Mw) of 1,000 to 30,000 and a molecular weight distribution (Mw/Mn) of 1.0 to 4.0 and/or a polymer (C-2) which comprises 5 to 35 mass% of the (meth)acrylate (c-1) unit and 65 to 95 mass % of an aromatic vinyl monomer (c-2) unit, the polymer (C-2) having a weight average molecular weight (Mw) of 1,000 to 30,000 and a molecular weight distribution (Mw/Mn) of 1.0 to 4.0. The details thereof are described below.

### (A) Thermoplastic resin

The thermoplastic resin contained in the mixture to be dynamically heat-treated in the thermoplastic elastomer composition of this embodiment has a melting point of not less than 200°C, preferably not less than 210°C, and still more preferably from 210°C to 300°C. If the melting point is less than 200°C, the obtained formed product may have insufficient strength. The thermoplastic resin is preferably at least one polymer selected from the group consisting of a polyester resin, a polyamide resin, and a polyester elastomer.

### (Polyester resin)

A polyester resin means a thermoplastic resin generally obtained by a polycondensation reaction of a saturated dicarboxylic acid and a saturated dihydric alcohol, a ring-opening reaction of a lactone, a polycondensation reaction of a compound having a hydroxyl group and a carboxyl group in one molecule, and the like. As examples, polyethylene terephthalate, polytrimethylene terephthalate (polypropylene terephthalate), polytetramethylene terephthalate (polybutyleneterephthalate), polyhexamethylene terephthalate, polycyclohexane-1,4-dimethylolterephthalate, polyneopentyl terephthalate, polyethylenenaphthalate, polypropylene naphthalate, polybutylene naphthalate, polycaprolactone, p-hydroxybenzoic acid polyester, and polyallylate can be given. Two or more polyester resins may be used in the thermoplastic elastomer of this embodiment. Among the above polyester resins, polyethylene terephthalate, polypropylene terephthalate, and polybutylene terephthalate are preferable. The terephthalic acid portion may be substituted by an alkyl group, a halogen group, or the like.

### (Polyamide resin)

As the polyamide resin, various known polyamide resins can be used. As specific examples, nylon 6 (N6), nylon 66 (N66), nylon 11 (N11), nylon 12 (N12), and aliphatic polyamides having an aromatic ring (nylon MXD6) can be given. A copolymer of these polyamide resins can also be used. As specific examples, a copolymer of nylon 6 and nylon 66 (N6/N66), an alternating copolymer of nylon 6 and nylon 10 (nylon 610 : N610), and an alternating copolymer of nylon 6 and nylon 12 (nylon 612 : N612) can be given.

Either one of these polyamide resins or a blend of two or more thereof may be used. As specific examples of the blend, two-component blends such as a blend of nylon 6 and nylon 66 (N6/N66), a blend of nylon 6 and nylon 11 (N6/N11), a blend of nylon 6 and nylon 12 (N6/N12), a blend of nylon 6 and nylon 610 (N6/N610), a blend of nylon 6 and nylon 612 (N6/N612), a blend of nylon 66 and nylon 11 (N66/N11), a blend of nylon 66 and nylon 12 (N66/N12), a blend of nylon 66 and nylon 610 (N66/N610), a blend of nylon 66 and nylon 612 (N66/N612), a blend of nylon 11 and nylon 12 (N11/N12), a blend of nylon 11 and nylon 610 (N11/N610), a blend of nylon 11 and nylon 612 (N11/N612), a blend of nylon 12 and nylon 610 (N12/N610), a blend of nylon 12 and nylon 612 (N12/N612), and a blend of nylon 610 and nylon 612 (N610/N612); three-component blends such as a blend of nylon 6, nylon 11, and nylon 610 (N6/N11/N610), a blend of nylon 6, nylon 11, and nylon 612 (N6/N11/N612), a blend of nylon 6, nylon 12, and nylon 610 (N6/N12/N610), a blend of nylon 6, nylon 12, and nylon 612 (N6/N12/N612), a blend of nylon 6, nylon 610, and nylon 612 (N6/N610/N612), a blend of nylon 66, nylon 11, and nylon 610 (N66/N11/N610), a blend of nylon 66, nylon 11, and nylon 612 (N66/N11/N612), a blend of nylon 66, nylon 12, and nylon 610 (N66/N12/N610), a blend of nylon 66, nylon 12, and nylon 612 (N66/N12/N612), and a blend of nylon 66, nylon 610, and nylon 612 (N66/N610/N612); four-component blends such as a blend of nylon 6, nylon 66, nylon 11, and nylon 610 (N6/N66/N11/N610), a blend of nylon 6, nylon 66, nylon 11, and nylon 612 (N6/N66/N11/N612), a blend of nylon 6, nylon 66, nylon 12, and nylon 610 (N6/N66/N12/N610), a blend of nylon 6, nylon 66, nylon 12, and nylon 612 (N6/N66/N12/N612), a blend of nylon 6, nylon 66, nylon 610, and nylon 612 (N6/N66/N610/N612), a blend of nylon 6, nylon 11, nylon 12, and nylon 610 (N6/N11/N12/N610), a blend of nylon 6, nylon 11, nylon 12, and nylon 612 (N6/N11/N12/N612), a blend of nylon 6, nylon 11, nylon 610, and nylon 612 (N6/N11/N610/N612), and a blend of nylon 6, nylon 12, nylon 610, and nylon 612 (N6/N12/N610/N612); five-component blends such as a blend of nylon 6, nylon 66, nylon 11, nylon 610, and nylon 62 (N6/N66/N11/N610/N612) and a blend of nylon 6, nylon 66, nylon 12, nylon 610, and nylon 612 (N6/N66/N12/N610/N612); and six-component blends such as a blend of nylon 6, nylon 66, nylon 11, nylon 12, nylon 610, and nylon 612 (N6/N66/N11/N12/N610/N612) can be given.

### (Polyester elastomer)

A polyester elastomer is known as a multiple block copolymer having a polyester and a polyether as main repeating units. In this embodiment, a multiple block copolymer having a hard segment of a high melting point crystalline polymer containing a crystalline aromatic polyester and a soft segment of a low melting point polymer containing an aromatic and/or aliphatic polyester unit which contains an aliphatic polyether can be conveniently used as the polyester elastomer.

The hard segment of a high melting point crystalline polymer containing a crystalline aromatic polyester is a polyester formed mainly from an aromatic dicarboxylic acid or an ester-forming derivative thereof and a diol or an ester-forming derivative thereof. As examples of the aromatic dicarboxylic acid, terephthalic acid, isophthalic acid, phthalic acid, naphthalene-2,6-dicarboxylic acid, naphthalene-2,7-dicarboxylic acid, anthracenedicarboxylic acid, diphenyl-4,4'-dicarboxylic acid, diphenoxyethanedicarboxylic acid, 4,4'-diphenyl ether dicarboxylic acid, 5-sulfoisophthalic acid, and 3-sulfosodium isophthalic acid can be given. Although an aromatic dicarboxylic acid is mainly used, a part of the aromatic dicarboxylic acid may be optionally replaced with an alicyclic dicarboxylic acid such as 1,4-cyclohexanedicarboxylic acid, cyclopentanedicarboxylic acid, and 4,4'-dicyclohexyldicarboxylic acid, or an aliphatic dicarboxylic acid such as adipic acid, succinic acid, oxalic acid, sebacic acid, decane dicarboxylic acid, and dimer acid. Of course, an ester-forming derivative of a dicarboxylic acid such as a lower alkyl ester, an aryl ester, a carbonate, and an acid halide can also be used.

As the diol, diols with a molecular weight of 400 or less, for example, aliphatic diols such as 1,4-butanediol, ethylene glycol, trimethylene glycol, pentamethylene glycol, hexamethylene glycol, neopentyl glycol, and decamethyleneglycol; alicyclic diols such as 1,1-cyclohexanedimethanol, 1,4-dicyclohexanedimethanol, and tricyclodecanedimethanol; and aromatic diols such as xylylene glycol, bis(p-hydroxy)diphenyl, bis(p-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, and 4,4'-dihydroxy-p-terphenyl, 4,4'-dihydroxy p-quarter phenyl are preferable. Ester-forming derivatives of these diols, such as an acetyl derivative and an alkaline metal salt, can also be used. Two or more of these dicarboxylic acids and derivatives thereof or the diols can be used in combination. An example of the most preferable high melting point crystalline polymer segment is polybutylene terephthalate derived from terephthalic acid and/or dimethyl terephthalate and 1,4-butanediol.

The soft segment of a low melting point polymer forming the polyester elastomer contains an aromatic and/or aliphatic polyester unit containing an aliphatic polyether. As examples of the aliphatic polyether, poly(ethylene oxide) glycol, poly(propylene oxide) glycol, poly(tetramethylene oxide) glycol, poly(hexamethylene oxide) glycol, a copolymer of ethylene oxide and propylene oxide, an ethylene oxide adduct of poly(propylene oxide) glycol, and a copolymer of ethylene oxide and tetrahydrofuran can be given. The addition of such an aliphatic polyether can provide the polyester elastomer with rubbery elasticity and can increase pliability of the thermoplastic elastomer composition without impairing the mechanical properties thereof.

As the aromatic polyester, the same crystalline aromatic polyester of the hard segment of a high melting point crystalline polymer as mentioned above can be given. As examples of the aliphatic polyester, poly(ε-caprolactone), polyenantholactone, polycaprilolactone, and polybutylene adipate can be given. Among the soft segments of a low melting point polymer containing the aromatic and/or aliphatic polyester unit which contains these aliphatic polyethers, poly(tetramethylene oxide) glycol, an ethylene oxide adduct of poly(propylene oxide) glycol, poly(ε-caprolactone), polybutylene adipate, and the like are preferable in view of the elastic properties of the resulting polyester block copolymer.

### (B) Elastomer

The elastomer (B) contained in the mixture to be dynamically heat-treated in the thermoplastic elastomer composition of this embodiment has a constitution unit derived from an ester group-containing monomer. As examples of the ester group-containing monomer, an alkyl acrylate and an alkoxyalkyl acrylate can be given. As examples of the elastomer (B) which has the constitution unit derived from these ester group-containing monomers, an acrylic rubber and an acrylonitrile-acrylic rubber (hereinafter collectively referred to from time to time as "acrylic rubber (B1)") and ethylene acrylic rubber (B-2) can be given.

### Acrylic rubber (B1)

As the acrylic rubber (B1), an acrylic rubber containing an alkyl acrylate and/or an alkoxyalkyl acrylate known in the art or an acrylonitrile-acrylic rubber which is a copolymer of the acrylic rubber and an unsaturated acrylonitrile monomer can be given.

As examples of the alkyl acrylate (b-1) which constitutes the acrylic rubber (B1), methyl acrylate, ethyl acrylate, propyl acrylate, butyl acrylate, and octyl acrylate can be given. Among these, ethyl acrylate, propyl acrylate, and butyl acrylate are preferable. As examples of the alkoxyalkyl acrylate, methoxymethyl acrylate, methoxyethyl acrylate, ethoxyethyl acrylate, butoxyethyl acrylate, and methoxyethoxyethyl acrylate can be given. Among these, methoxyethyl acrylate, ethoxyethyl acrylate, and the like are preferable. These alkyl acrylates and alkoxyalkyl acrylates may be used either individually or in combination of two or more.

The amount of the alkyl acrylate (b-1) in the acrylic rubber (B1) (the copolymerization ratio in the acrylic rubber (B1)) is preferably from 20 to 99.99 mass%, more preferably from 60 to 94.98 mass%, and particularly preferably from 70 to 90 mass%. If this ratio is less than 20 mass%, there is a tendency that the hardness of the resulting thermoplastic elastomer composition is so large that favorable elasticity cannot be obtained. On the other hand, if more than 99.99 mass%, the oil resistance of the resulting thermoplastic elastomer composition tends to decrease.

As specific examples of the monomer (b-2) having a carbon-carbon double bond on the side chain, dihydrodicyclopentenyl acrylate, dihydrodicyclopentenyl methacrylate, dihydrodicyclopentenyl itaconate, dihydrodicyclopentenyl maleate, dihydrodicyclopentenyl fumarate, dihydrodicyclopentenyloxyethyl acrylate (DCPEA), dihydrodicyclopentenyloxyethyl methacrylate, dihydrodicyclopentenyloxyethyl itaconate, dihydrodicyclopentenyloxyethyl maleate, dihydrodicyclopentenyloxyethyl fumarate, vinyl methacrylate (CAS No.4245-38-8), vinyl acrylate (CAS No.2177-18-6), 1,1-dimethylpropenyl methacrylate, 1,1-dimethylpropenyl acrylate, 3,3-dimethylbutenyl methacrylate, 3,3-dimethylbutenyl acrylate, divinyl itaconate, divinyl maleate, divinyl fumarate, dicyclopentadiene, methyl dicyclopentadiene, ethylidene norbornene, 1,1-dimethylpropenyl methacrylate, 1,1-dimethylpropenyl acrylate, 3,3-dimethylbutenyl methacrylate, 3,3-dimethylbutenyl acrylate, vinyl 1,1-dimethylpropenyl ether, vinyl 3,3-dimethylbutenyl ether, 1-acryloyloxy-1-phenylethene, 1-acryloyloxy-2-phenylethene, 1-methacryloyloxy-1-phenylethene, and 1-methacryloyloxy-2-phenylethene can be given. These monomers may be used either individually or in combination of two or more. Of these, dihydrodicyclopentenyl acrylate, dihydrodicyclopentenyl methacrylate, dihydrodicyclopentenyloxyethyl acrylate, dihydrodicyclopentenyloxyethyl methacrylate, vinyl methacrylate, and vinyl acrylate are particularly preferable.

The amount of the monomer (b-2) having a carbon-carbon double bond on the side chain in the acrylic rubber (B1) (the copolymerization ratio in the acrylic rubber (B1)) is preferably from 0.01 to 20 mass%, and more preferably from 0.02 to 8 mass%. If this ratio is less than 0.01 mass%, the degree of crosslinking of the resulting thermoplastic elastomer composition tends to be insufficient and the tensile strength tends to be small, resulting in poor mechanical strength thereof. On the other hand, if this ratio is more than 20 mass%, the hardness of the resulting thermoplastic elastomer composition tends to be too large.

As examples of the unsaturated acrylonitrile monomer (b-3), acrylonitrile, methacrylonitrile, ethacrylonitrile, α-chloroacrylonitrile, and α-fluoroacrylonitrile can be given. These monomers may be used either individually or in combination of two or more. Of these, acrylonitrile is particularly preferable.

The amount of the unsaturated acrylonitrile monomer (b-3) in the acrylic rubber (B1) (the copolymerization ratio in the acrylic rubber (B1)) is preferably from 0 to 40 mass%, more preferably from 5 to 35 mass%, and particularly preferably from 10 to 30 mass%. On the other hand, if this ratio is more than 40 mass%, the hardness of the resulting thermoplastic elastomer composition tends to be too large. A ratio of more than 5 mass% tends to increase the oil resistance of the resulting thermoplastic elastomer composition.

Although there are no particular limitations to the monomer (b-4) copolymerizable with the alkyl acrylate (b-1), the monomer (b-2) having a carbon-carbon double bond in the side chain, and the unsaturated acrylonitrile monomer (b-3) as long as the monomer can be copolymerizable, monomers having a functional group are preferable. As specific examples, monofunctional methacrylates such as methyl methacrylate, benzyl methacrylate, phenyl methacrylate, 1-methylcyclohexyl methacrylate, cyclohexyl methacrylate, chlorobenzyl methacrylate, 1-phenylethyl methacrylate, 1,2-diphenylethyl methacrylate, diphenylmethyl methacrylate, furfuryl methacrylate, 1-phenylcyclohexyl methacrylate, pentachlorophenyl methacrylate, and pentabromophenyl methacrylate, styrene, vinyltoluene, vinylpyridine, α-methylstyrene, vinyl naphthalene, a halogenated styrene, acrylamide, methacrylamide, N-methylolacrylamide, vinyl acetate, vinyl chloride, vinylidene chloride, a (meth)acrylate of an alicyclic alcohol (such as cyclohexyl acrylate), and a (meth)acrylate of an aromatic alcohol (such as benzyl acrylate) can be given. The addition of monofunctional methacrylates can reduce blocking of crumbs produced after polymerizing the acrylic rubber (B1), thereby ensuring easy handling.

As other examples of the "monomer (b-4) copolymerizable with these", polyfunctional unsaturated monomers such as ethylene glycol di(meth)acrylate, propylene glycol di(meth)acrylate, 1,4-butanediol di(meth)acrylate, 1,6 hexanediol di(meth)acrylate, trimethylolpropane di(meth)acrylate, pentaerythritol tri(meth)acrylate, pentaerythritol tetra(meth)acrylate, divinylbenzene, diisopropenylbenzene, trivinylbenzene, and hexamethylene di(meth)acrylate can be given.

When a polyfunctional unsaturated monomer is copolymerized, a partially crosslinked rubber is obtained as the acrylic rubber (B1) and the resulting formed product has an improved surface. In addition, because the amount the crosslinking agent and crosslinking adjuvant to be added during dynamic crosslinking can be reduced, the cost can be reduced. As the monomer converted into "constitution unit (B4) derived from a copolymerizable monomer" after copolymerization, methyl methacrylate, benzyl methacrylate, and phenyl methacrylate are preferable, with a particularly preferable monomer being methyl methacrylate. The amount of the copolymerizable monomer (b-4) in the acrylic rubber (B1) is preferably from 0 to 30 mass%, and more preferably from 0 to 10 mass%. If this amount is more than 30 mass%, crosslinking excessively proceeds and the mechanical strength thereof tends to be impaired.

The acrylic rubber (B1) is preferably a functionalized rubber. Specifically, the acrylic rubber is preferably carboxylated, hydroxylated, aminated, or epoxidized. As the copoplymerizable monomer for introducing a carboxyl group, a hydroxyl group, an amino group, or an epoxy group into the acrylic rubber (B1), the following monomers having any one of these functional groups can be given.

As the monomer having a carboxyl group, unsaturated carboxylic acids such as (meth)acrylic acid, maleic acid, fumaric acid, itaconic acid, tetraconic acid, and cinnamic acid; non-polymerizable polyvalent carboxylic acids such as phthalic acid, succinic acid, and adipic acid; free carboxyl group-containing esters such as a monoester of these carboxylic acids and a hydroxyl group-containing unsaturated compound such as (meth)allyl alcohol and 2- hydroxyethyl (meth)acrylate, and their salts can be given. Among these, unsaturated carboxylic acids are preferable. These monomers having a carboxyl group may be used either individually or in combinations of two or more thereof.

As examples of the hydroxyl group-containing monomer, hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, and 4-hydroxybutyl (meth)acrylate; mono(meth)acrylates of polyalkylene glycol (the number of alkylene glycol units is 2 to 23, for example) such as polyethylene glycol and polypropylene glycol; hydroxyl group-containing unsaturated amides such as N-hydroxymethyl(meth)acrylamide, N-(2-hydroxyethyl)(meth)acrylamide, and N,N-bis(2-hydroxyethyl)(meth)acrylamide; hydroxyl group-containing vinyl aromatic compounds such as o-hydroxystyrene, m-hydroxystyrene, p-hydroxystyrene, o-hydroxy-α-methylstyrene, m-hydroxy-α-methylstyrene, p-hydroxy-α-methylstyrene,and p-vinylbenzyl alcohol; and (meth)allyl alcohol can be given. Of these hydroxyalkyl (meth)acrylates and hydroxyl group-containing vinyl aromatic compounds are preferable. These compounds may be used either individually or in combination of two or more.

As amino group-containing monomers, monomers having at least one of a primary amino group, a secondary amino group, and a tertiary amino group can be given. Among these, monomers having a tertiary amino group are preferable. As examples, dialkylaminoalkyl (meth)acrylates such as dimethylaminomethyl (meth)acrylate, diethylaminomethyl (meth)acrylate, 2-dimethylaminoethyl (meth)acrylate, 2-diethylaminoethyl (meth)acrylate, 2-(di-n-propylamino)ethyl (meth)acrylate, 2-dimethylaminopropyl (meth)acrylate, 2-diethylaminopropyl (meth)acrylate, 2-(di-n-propylamino)propyl (meth)acrylate, 3-dimethylaminopropyl (meth)acrylate, 3-diethylaminopropyl (meth)acrylate, and 3-(di-n-propylamino)propyl (meth)acrylate; N-dialkylaminoalkyl group-containing unsaturated amides such as N-dimethylaminomethyl(meth)acrylamide, N-diethylaminomethyl(meth)acrylamide, N-(2-diinethylaminoethyl)(meth)acrylamide, N-(2-diethylaminoethyl)(meth)acrylamide, N-(2-dimethylaminopropyl)(meth)acrylamide, N-(2-diethylaminopropyl)(meth)acrylamide, N-(3-dimethylaminopropyl)(meth)acrylamide, and N-(3-diethylaminopropyl)(meth)acrylamide; tertiary amino group-containing vinyl aromatic compounds such as N,N-dimethyl-p-aminostyrene, N,N-diethyl-p-aminostyrene, dimethyl(p-vinylbenzyl)amine, diethyl(p-vinylbenzyl)amine, dimethyl(p-vinylphenethyl)amine, diethyl(p-vinylphenethyl))amine, dimethyl(p-vinylbenzyloxymethyl)amine, dimethyl[2-(p-vinylbenzyloxy)ethyl]amine, diethyl(p-vinylbenzyloxymethyl)amine, diethyl[2-(p-vinylbenzyloxy)ethyl]amine, dimethyl(p-vinylphenethyloxymethyl)amine, dimethyl[2-(p-vinylphenethyloxy)ethyl]amine, diethyl(p-vinylphenethyloxymethyl)amine, diethyl[2-(p-vinylphenethyloxy)ethyl]amine, 2-vinylpyridine, 3-vinylpyridine, and 4-vinylpyridine can be given. Of these, dialkylaminoalkyl (meth)acrylates and tertiary amino group-containing vinyl aromatic compounds are preferable. These compounds may be used either individually or in combination of two or more.

As examples of the monomer having an epoxy group, (meth)allyl glycidyl ether, glycidyl (meth)acrylate, and 3,4-oxycyclohexyl (meth)acrylate can be given. These monomers may be used either individually or in combination of two or more.

The radical polymerization initiator used when copolymerizing the monomer mixture is not particularly limited. For example, peroxides such as potassium persulfate, p-menthane hydroperoxide, and methyl isopropyl ketone peroxide and azo compounds such as azobisisobutyronitrile can be given. The amount of the radical polymerization initiator is about 0.001 parts to 1.0 part by weight of 100 parts by weight of the monomer mixture.

The copolymerization reaction for obtaining the acrylic rubber (B1) can be carried out using a common polymerization method such as a suspension polymerization method, an emulsion polymerization method, and a solution polymerization method. Any emulsifiers which can emulsify and disperse the above monomer mixture, for example, an alkyl sulfate, an alkyl aryl sulfonate, and a salt of a higher fatty acid, can be used in the emulsion polymerization method. The reaction is carried out at a temperature of usually from 0 to 80°C usually for 0.01 to 30 hours. The acrylic rubber (B1) obtained in this manner has preferably a Mooney viscosity (ML₁₊₄, 100°C) of 10 to 150.

### (B2) Ethylene acrylic rubber

Examples of the ethylene acrylic rubber (B2) include a copolymer of ethylene and acrylic acid ester and a copolymer obtainable by further polymerizing a crosslinking site monomer with the copolymer of ethylene and acrylic acid ester. As a specific example, VAMAC^{™}, manufactured by Mitsui-du Pont Polychemical Co., Ltd., can be given.

The amount of the elastomer (B) in the thermoplastic elastomer composition of this embodiment is preferably 40 to 85 mass%, more preferably 43 to 83 mass%, and particularly preferably 45 to 80 mass% for 100 mass% of the total of the thermoplastic resin (A) and the elastomer (B). If the amount of the elastomer (B) is less than 40 mass%, the rubber elasticity of the ultimately obtained thermoplastic elastomer composition tends to decrease. On the other hand, if the amount of the elastomer (B) is more than 85 mass%, this is too large for the phase structure (morphology) of the ultimately obtained thermoplastic elastomer composition to have a good sea-island structure, consisting of the sea of a thermoplastic resin (matrix) and islands of crosslinked acrylic rubber particles (domains)), which is characteristic to a dynamically crosslinked thermoplastic elastomer composition, leading to poor moldability and mechanical properties thereof.

### (C) Crosslinking agent

The crosslinking agent (C) used for obtaining the thermoplastic elastomer composition of this embodiment is a polymer (C-1) which consists of a (meth)acrylate (c-1) unit having a weight average molecular weight (Mw) of 1,000 to 30,000 and a molecular weight distribution (Mw/Mn) of 1.0 to 4.0 and/or a polymer (C-2) which comprises 5 to 35 mass% of the (meth)acrylate (c-1) unit and 65 to 95 mass% of an aromatic vinyl monomer (c-2) unit, the polymer (C-2) having a weight average molecular weight (Mw) of 1,000 to 30,000 and a molecular weight distribution (Mw/Mn) of 1.0 to 4.0.

As examples of the (meth)acrylate (c-1), an alkyl (meth)acrylate having 1 to 20 carbon atoms (the alkyl group may be linear, branched, or cyclic), a polyalkylene glycol (meth)acrylate, an alkoxyalkyl (meth)acrylate, a hydroxyalkyl (meth)acrylate, glycidyl (meth)acrylate, dialkylaminoalkyl (meth)acrylate, benzyl (meth)acrylate, a phenoxyalkyl (meth)acrylate, cyclohexyl (meth)acrylate, isobornyl (meth)acrylate, and an alkoxysilylalkyl (meth)acrylate can be given. These (meth)acrylates may be used either individually or in combination of two or more.

Taking flowability and mutual solubility with the thermoplastic elastomer composition into consideration, an alkyl (meth)acrylate having 1 to 6 carbon atoms (the alkyl group may be linear, branched, or cyclic), glycidyl (meth)acrylate, and a polyalkylene glycol (meth)acrylate are more preferable.

As specific examples of the aromatic vinyl monomer (c-2), styrene, α-methylstyrene, p-methylstyrene, α-methyl-p-methylstyrene, p-methoxystyrene, o-methoxystyrene, 2,4-dimethylstyrene, chlorostyrene, and bromostyrene can be given. These styrenes may be used either individually or in combination of two or more. Taking excellent mutual solubility with the acrylic rubber into consideration, styrene and α-methylstyrene are preferable.

The proportion of the copolymer components of the polymer (C-2), i.e. the proportion of the (meth)acrylate (c-1) and the aromatic vinyl monomer (c-2), is 5 to 35 mass% of the (meth)acrylate (c-1) and 65 to 95 mass% of the aromatic vinyl monomer (c-2). If the proportion of the aromatic vinyl monomer (c-2) is more than 95 mass%, the crosslinking reaction with acrylic resin is impaired and the mechanical strength tends to be poor. If this proportion is less than 65 mass%, mutual solubility with the rubber is reduced, resulting in poor mechanical strength. If the proportion of the (meth)acrylate (c-2) is less than 5 mass%, the crosslinking reaction with acrylic resin is impaired and the mechanical strength tends to be poor. If the proportion of the (meth)acrylate (c-1) is more than 35 mass%, mutual solubility with the rubber is reduced, resulting in poor mechanical strength. In order to obtain a thermoplastic elastomer composition with well balanced properties, preferably the amount of the (meth)acrylate (c-1) is from 5 to 33 mass% and the amount of the aromatic vinyl monomer (c-2) is from 67 to 95 mass%, and more preferably the amount of the (meth)acrylate (1) is from 5 to 30 mass% and the amount of the aromatic vinyl monomer (c-2) is from 70 to 95 mass%.

Although the major copolymer components used for producing the polymer (C-2) are the (meth)acrylate (c-1) and the aromatic vinyl monomer (c-2), other radically copolymerizable vinyl monomers may be included in an amount preferably 0 to 30 mass%. As specific examples of the other vinyl monomers, (meth)acrylic acid, maleic anhydride, fumaric acid, (meth)acrylamide, (meth)acryldialkylamides, vinyl esters, vinyl ethers, and (meth)allyl ethers can be given.

The crosslinking agent (C) can be obtained usually by radical polymerization, preferably by continuous polymerization at a high temperature of 180 to 300°C. The continuous polymerization at a high temperature can produce a crosslinking agent (C) containing a large amount of linear components and a small amount of branched components, because at a high temperature, it is difficult to cause the radical branched reaction initiated by a hydrogen extraction reaction from a high polymer chain, allowing a chain breaking reaction to be predominant. Moreover, a low molecular weight polymer which contains impurities such as initiators and chain transfer agents in a large amount can be easily produced due to a predominant breaking reaction. Furthermore, a stirring vessel can be preferably used as a reactor to obtain a vinyl copolymer (crosslinking agent (C)) with a small composition distribution or a narrow molecular weight distribution.

The known high temperature continuous radical polymerization methods disclosed in Published Japanese Translation of PCT Application No. 57-502171, Japanese Patent Application Laid-open No. 59-6207, Japanese Patent Application Laid-open No. 60-215007, and the like can be used. For example, a method of feeding a vinyl monomer mixture to a pressure resistant reactor set at a prescribed temperature under pressure at a fixed rate, while extracting the polymer solution in an amount equivalent to the feed rate can be given. A polymerization solvent may be added to the reactor as required. A polymerization initiator may optionally be added to the vinyl monomer mixture. The amount of the polymerization initiator is from 0.001 to 3 parts by mass for 100 parts by mass of the vinyl monomer mixture. The pressure varies according to the reaction temperature and the boiling points of the vinyl monomer mixture and the polymerization solvent used. Therefore, the pressure under which reaction temperature can be maintained without affecting the reaction can be used.

The reaction temperature for polymerizing the vinyl monomers is preferably from 180 to 300°C, and more preferably from 200 to 270°C. If more than 300°C, problems such as coloring and heat deterioration may arise, and if less than 180°C, a branching reaction easily occurs and the molecular weight distribution tends to expand. Therefore, a large amount of initiators and chain transfer agents are necessary for lowering the molecular weight, resulting in an adverse effect on weather resistance, heat resistance, and durability of the ultimately obtained thermoplastic elastomer. Moreover, problems in the production process such as difficulty in removing heat may occur. The residence time of the vinyl monomer mixture in the polymerization reaction is preferably 1 to 60 minutes, and more preferably 5 to 30 minutes. If the residence time is less than 1 minute, the vinyl monomers may not sufficiently react. If more than 60 minutes, productivity is poor, and coloring and heat deterioration may occur. A process using a continuously stirred tank reactor is more preferable than that using a tubular-type reactor in order to produce a crosslinking agent (C) with a small composition distribution or a narrow molecular weight distribution.

The weight average molecular weight (Mw) of the crosslinking agent (C) is 1,000 to 30,000. If the weight average molecular weight (Mw) of the crosslinking agent (C) is less than 1,000, surface bleeding tends to occur. On the other hand, if the weight average molecular weight (Mw) of the crosslinking agent (C) is more than 30,000, mutual solubility becomes poor, resulting in a tendency of reduced crosslinking reactivity with the elastomer (B). The weight average molecular weight (Mw) of the crosslinking agent (C) is preferably from 1,500 to 15,000. Taking flowability, mechanical properties, and heat resistance into consideration, a more preferable range of the weight average molecular weight (Mw) of the crosslinking agent (C) is from 2,000 to 30,000, with a still preferable range being from 2,500 to 20,000.

The molecular weight distribution (Mw/Mn) (the ratio of the weight average molecular weight (Mw) to the number-average molecular weight (Mn)) of the polymer (B) is from 1.0 to 4.0. If the molecular weight distribution (Mw/Mn) of the crosslinking agent (C) is more than 4.0, not only mutual solubility becomes poor due to the effect of high molecular components, which results in a tendency of reduced crosslinking reactivity with the thermoplastic resin (A), but also surface bleeding tends to occur due to the effect of low molecular components. The molecular weight distribution (Mw/Mn) of the crosslinking agent (C) is preferably from 1.2 to 3.5, and more preferably from 1.2 to 3.0. Although a molecular weight distribution (Mw/Mn) of less than 1.2 causes no particular problems, the molecular weight distribution (Mw/Mn) of a usually obtained crosslinking agent (C) is not less than 1.2.

The crosslinking agent (C) can be used either individually or in combination of two or more. The (meth)acrylate (c-1) and the aromatic vinyl monomer (c-2) preferably comprise a glycidyl group and the like. When the (meth)acrylate (c-1) and the aromatic vinyl monomer (c-2) contain a glycidyl group and the like, the epoxide content of the crosslinking agent (C) is from 0.01 to 20 meq/g, more preferably from 0.1 to 15 meq/g, and particularly preferably from 0.5 to 10 meq/g. If the epoxide content of the crosslinking agent (C) is less than 0.1 meq/g, the crosslinking reactivity tends to be low. On the other hand, if the epoxide content is more than 20 meq/g, the crosslinking reaction may not be controlled in a stable manner.

The amount of the crosslinking agent (C) used is usually 0.1 to 20 parts by mass, preferably 0.3 to 15 parts by mass, and still more preferably 0.5 to 10 parts by mass for 100 parts by mass of the total of the thermoplastic resin (A) and the elastomer (B). If the amount of the crosslinking agent (C) used is more than 20 parts by mass, not only it is difficult to control the crosslinking reaction in a stable manner, but also the hardness of the resulting crosslinked rubber is too large for the product to exhibit suitable rubber elasticity. On the other hand, if the amount of the crosslinking agent (C) used is less than 0.1 parts by mass, the crosslinking reactivity is low and a crosslinked rubber with a low crosslinking density is produced. Thus, the product cannot exhibit suitable rubber elasticity.

As examples of the crosslinking agent (C) used for obtaining the thermoplastic elastomer composition of the present invention, ARUFON UG^{™} series products such as ARUFON UG-4010^{™} and ARUFON UG-4030^{™} manufactured by Toagosei Co., Ltd. can be given. The crosslinking agent (C) can selectively crosslink without being affected by the types of crosslinking points of the elastomer (B).

It is preferable that the acrylic rubber composition of this embodiment contains methyl hydrogen silicone oil (hereinafter referred to from time to time as "SiH oil") as a crosslinking adjuvant. The use of the SiH oil as a crosslinking adjuvant can increase the crosslinking reaction rate.

The amount of the SiH oil used is preferably 0.01 to 20 parts by mass, more preferably 0.05 to 15 parts by mass, and still more preferably 0.1 to 10 parts by mass for 100 parts by mass of the elastomer (B). If the amount of the SiH oil used is more than 20 parts by mass, the crosslinking reaction may not be controlled in a stable manner. On the other hand, if less than 0.01 part by mass, the effect of using the SiH oil cannot be sufficiently exhibited. There is a tendency that the crosslinking density of the thermoplastic elastomer decreases and the mechanical properties thereof are impaired.

In addition to the crosslinking agent (C), a compound which can be commonly used as a crosslinking agent may be used. Crosslinking agents other than the crosslinking agent (C) may be any compounds which can crosslink at least one elastomer in the elastomer composition. As examples of such a crosslinking agent, sulfur, an organic sulfur-containing compound, an organic peroxide, a resin, a quinone derivative, a polyhalide compound, a bis(dioxotriazophosphorus) derivative, an aldehyde, and an epoxy compound can be given. Furthermore, methyl hydrogen siloxane used for platinum crosslinking by a hydrosilyl-forming reaction in the presence of a platinum catalyst can be given. Among these crosslinking agents, sulfur, an organic sulfur-containing compound, an organic peroxide, and a methyl hydrogen siloxane are preferable, with an organic peroxide being particularly preferable. These crosslinking agents may be used either individually or in combination of two or more. The amount of these crosslinking agents used is preferably 0.1 to 20 parts by mass, and more preferably 1 to 10 parts by mass for 100 parts by mass of the elastomer (B).

As an organic peroxide, those having a decomposition temperature for obtaining a one minute half-life of 150°C or more is preferable. As specific examples, 1,1-bis(t-butylperoxy)cyclohexane, 2,2-bis(4,4-di-t-butylperoxycyclohexyl)propane, 1,1-bis(t-butylperoxy)cyclododecane, t-hexyl peroxyisopropylmonocarbonate, t-butylperoxymaleic acid, t-butyl peroxy-3,5,5-trimethylhexanoate, t-butyl peroxylaurate, 2,5-dimethyl-2,5-di(m-toluoylperoxy)hexane, t-butyl peroxyisopropylmonocarbonate, t-butyl peroxy-2-ethylhexylmonocarbonate, t-hexyl peroxybenzoate, 2,5-dimethyl-2,5-di(benzoylperoxy)hexane, t-butyl peroxyacetate, 2,2-bis(t-butylperoxy)butane, t-butyl peroxybenzoate, n-butyl-4,4-bis(t-butylperoxy)valerate, di-t-butyl peroxyisophthalate, α,α'-bis(t-butylperoxy)diisopropylbenzene, dicumyl peroxide, 2,5-dimethyl-2,5-di(t-butylperoxy)hexane, t-butyl cumylperoxide, di-t-butyl peroxide, p-menthane hydroperoxide, 2,5-dimethyl-2,5-di(t-butylperoxy)hexyne-3, diisopropylbenzene hydroperoxide, t-butyltrimethylsilyl peroxide, 1,1,3,3-tetramethylbutyl hydroperoxide, cumene hydroperoxide, t-hexyl hydroperoxide, and t-butyl hydroperoxide can be given. The amount of the organic peroxide used is preferably 0.1 to 15 parts by mass, and more preferably 0.3 to 10 parts by mass for 100 parts by mass of the elastomer (B). If the amount of the organic peroxide added is less than 0.3 parts by mass, not only does it take a very long period of time for crosslinking, but also crosslinking tends to be insufficient. If more than 15 parts by mass, the crosslinked product tends to be hard and brittle.

Either one organic peroxide may be independently used or a mixture of two or more organic peroxides may be used. A homogeneous and moderate crosslinking reaction is ensured by using the organic peroxide together with an adequate crosslinking adjuvant. As examples of such a crosslinking adjuvant, sulfur or a sulfur compound such as sulfur powder, colloidal sulfur, precipitated sulfur, insoluble sulfur, surface-treated sulfur, and dipentamethylenethiuram tetrasulfide; an oxime compound such as p-quinoneoxime and p,p'-dibenzoylquinoneoxime; and a polyfunctional monomer such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, trimethylolpropane tri(meth)acrylate, diallyl phthalate, tetraallyloxyethane, triallyl cyanurate, N,N'-m-phenylenebismaleimide, N,N'-tolylenebismaleimide, maleic anhydride, divinylbenzene, and zinc di(meth)acrylate can be given. Among these crosslinking adjuvants, p,p'-dibenzoylquinoneoxime, N,N'-m-phenylenebismaleimide, and divinylbenzene are preferable. N,N'-m-phenylenebismaleimide can also function as a crosslinking agent when used alone.

Either one crosslinking adjuvant may be independently used or a mixture of two or more crosslinking adjuvants may be used. The amount of the crosslinking adjuvant used is preferably 0 to 20 parts by mass, and more preferably 1 to 10 parts by mass for 100 parts by mass of the elastomer (B). When sulfur is used as a crosslinking agent, thiazoles such as mercaptobenzothiazole, thiurams such as tetramethylthiuram disulfide, guanidines such as diphenyl guanidine, and dithiocarbamic acid salts such as zinc dimethyldithiocarbamate are effectively used as the crosslinking adjuvant. When an organic sulfur-containing compound is used as the crosslinking agent, a thiuram compound such as tetramethylthiuram disulfide or 4,4'-dithiomorpholine is effectively used as the crosslinking adjuvant. The amount of these crosslinking adjuvants used is preferably 0.1 to 20 parts by mass, and more preferably 1 to 10 parts by mass for 100 parts by mass of the elastomer (B).

Various additives such as a plasticizer, an extender oil, an inorganic filler, a metal oxide, an antioxidant, a reinforcing agent, a thermoplastic resin, and a high molecular compound such as a rubber may be added to the thermoplastic elastomer composition of this embodiment.

### (Plasticizer)

As examples of the plasticizer, a polyether plasticizer, a polyether ester plasticizer, and a trimellitic acid plasticizer having excellent heat resistance can be given.

As an example of the polyether plasticizer, a condensate of an aliphatic dicarboxylic acid with an alkoxy polyoxyethylene alcohol can be given. As specific examples, Adekacizer RS-705 (manufactured by Asahi Denka Kogyo Co., Ltd.) and Monocizer W-264 (manufactured by Dainippon Ink and Chemicals, Inc.) can be given. Although there are no specific limitations to the method for producing a polyether ester plasticizer, the polyether ester plasticizer can be easily obtained by reacting 2-ethylhexyl acid and an ether glycol at a molar ratio of 2:1, for example, by reacting an ether glycol mixture containing pentaethylene glycol, hexethylene glycol, heptaethylene glycol, and the like at prescribed amounts with 2-ethylhexyl acid by a conventional method. It is also possible to previously react each of the pentaethylene glycol, hexethylene glycol, heptaethylene glycol, and the like separately with 2-ethylhexyl acid by a conventional method to obtain diesters and to mix the diesters at a ratio to obtain an average polymerization degree of polyethylene glycol in the range of 5 to 10. As specific examples, Adekacizer RS-107^{™}, RS-1000^{™}, RS-735^{™}, and RS-700^{™}, all manufactured by Asahi Denka Kogyo Co., Ltd., can be given.

As an example of the trimellitic acid plasticizer, a trimellitic acid ester obtainable by condensing three carboxylic acids of trimellitic acid respectively with an alcohol can be given. For example, trimethyl trimellitate, triethyl trimellitate, tripropyl trimellitate, tributyl trimellitate, triamyl trimellitate, trihexyl trimellitate, heptyl trimellitate, tri-n-octyl trimellitate, tri-2-ethylhexyl trimellitate, trinonyl trimellitate, tris(decyl) trimellitate, tris(dodecyl) trimellitate, tris(tetradecyl) trimellitate, a tris(C₈-C₁₂ mixed alkyl) trimellitate, a tris(C₇-C₉ mixed alkyl) trimellitate, and trilauryl trimellitate can be given. As specific examples, Adekacizer^{™} C-8, C-880, C-79, C810, C-9N, and C-10, all manufactured by Asahi Denka Kogyo Co., Ltd., can be given. These plasticizers may be used either individually or in combination of two or more. The plasticizer may be added to the mixture of the thermoplastic resin (A) and the elastomer (B) when producing the thermoplastic elastomer composition or may be previously added to the elastomer (B).

The amount of the plasticizer used is preferably 0 to 100 parts by mass, more preferably 5 to 70 parts by mass, and particularly preferably 10 to 50 parts by mass for 100 parts by mass of the total of the thermoplastic resin (A) and the elastomer (B). If the amount of the plasticizer is more than 100 parts by mass, the plasticizer may bleed out from the ultimately obtained thermoplastic elastomer composition, giving rise to a tendency of lowering the mechanical strength and rubber elasticity.

### (Extender oil)

Although any extender oil commonly blended with rubber compositions can be used as the extender oil, an aromatic or naphthenic extender oil is preferable. A particularly preferable extender oil has an aromatic carbon content (CA%), naphthenic carbon content (CN%), and paraffinic carbon content (CF%) respectively of 3 to 60%, 20 to 50%, and 0 to 60% (provided that CA + CN + CF = 100%), determined by ring analysis by the n-d-M method described in ASTM D3238-95 (re-approved in 2000). If CF is more than 60%, the mechanical strength of the thermoplastic elastomer composition and the surface of the molded articles may be poor. The amount of the extender oil is preferably 0 to 50 parts by mass, and more preferably 1 to 20 parts by mass for 100 parts by mass of the total of the thermoplastic resin (A) and the elastomer (B).

### (Inorganic filler)

An inorganic filler may be incorporated in the thermoplastic elastomer composition of this embodiment. Any inorganic filler conventionally used with a rubber composition may be used. As examples, silica, limestone powder, whitewash, light calcium carbonate, ultrafine activated calcium carbonate, special calcium carbonate, basic magnesium carbonate, kaolin, sintered clay, pyrophyllite clay, silane-treated clay, synthetic calcium silicate, synthetic magnesium silicate, synthetic aluminium silicate, magnesium carbonate, aluminium hydroxide, magnesium hydroxide, magnesium oxide, kaolin, sericite, talc, flour talc, wollastonite, zeolite, bentonite, mica, asbestos, PMF (processed mineral fiber), sepiolite, potassium titanate, ellestadite, gypsum fiber, glass balloon, silica balloon, hydrotalcite, flyash balloon, shirasu baloon, carbon balloon, alumina, barium sulfate, aluminium sulfate, calcium sulfate, and molybdenum disulfide can be given. Either one inorganic filler may be independently used or a mixture of two or more inorganic fillers may be used. Of these, silica is particularly preferable due to its high oil absorptivity.

The amount of the inorganic filler is preferably 0 to 50 parts by mass, more preferably 0.5 to 30 parts by mass, and particularly preferably 1 to 20 parts by mass for 100 parts by mass of the total of the thermoplastic resin (A) and the elastomer (B). If more than 50 part by mass, the viscosity of the resulting mixture is too high and the compression set which is an index of the pliability of the resulting thermoplastic elastomer composition tends to be too large.

When using silica as an inorganic filler, a silane coupling agent is usually used for the surface treatment of the silica. The silane coupling agent used is not particularly limited and includes, for example, vinyltrimethoxysilane, vinyltriethoxysilane, vinyltris(β-methoxyethoxy)silane, vinyltrichlorosilane, vinyltriacetoxysilane, N-(β-aminoethyl)-γ-aminopropyltrimethoxysilane, γ-aminopropyltrimethoxysilane, γ-aminopropyltriethoxysilane, γ-glycidoxypropyltrimethoxysilane, γ-glycidoxypropylmethyldimethoxysilane, β-(3,4-epoxycyclohexyl)ethyltrimethoxysilane, γ-methacryloxypropyltrimethoxysilane, γ-methacryloxypropyltris(β-methoxyethoxy)silane, γ-mercaptopropyltrimethoxysilane, methyltrimethoxysilane, methyltriethoxysilane, hexamethyldisilazane, γ-anilinopropyltrimethoxysilane, and N-[β-(N-vinylbenzalamino)ethyl]-γ-aminopropyltrimethoxysilane·hydrochloride. Either one silane coupling agent may be independently used or a mixture of two or more silane coupling agents may be used together.

The amount of the silane coupling agent is preferably 0.1 to 10 parts by mass, and more preferably 0.5 to 5 parts by mass for 100 parts by mass of the total of the thermoplastic resin (A) and the elastomer (B). If less than 0.1 part by mass, the tensile characteristics, compression set, and the like of the resulting thermoplastic elastomer composition tend to be insufficient. On the other hand, if more than 10 parts by mass, the rubber elasticity of the resulting thermoplastic elastomer composition tends to decrease.

The pH of the silica is preferably 2 to 10, more preferably 3 to 8, and particularly preferably 4 to 6. If the pH is less than 2, the crosslinking reaction tends to be retarded. On the other hand, if the pH exceeds 10, scorching stability tends to become poor. The amount of oil absorption (ml/100 g) of the silica is preferably 150 to 300, and more preferably 200 to 300. If the amount of oil absorption is less than 150, the viscosity tends to decrease and the adhesiveness tends to increase when mixing the elastomer (B) with the extender oil in the process of producing the thermoplastic elastomer composition, resulting in impaired handling properties. On the other hand, if the amount of oil absorption is more than 300, the viscosity tends to excessively increase.

There are no specific limitations to the machine used for kneading the mixture containing the thermoplastic resin (A) and the elastomer (B), and optional components such as a plasticizer and an extender oil in the presence of the crosslinking agent (C) in the method of producing the thermoplastic elastomer composition of this embodiment. The mixture can be kneaded using a kneader. As more specific examples of the kneader, a continuous extruder and a direct vent kneader can be given. Of these, from the viewpoint of economy and process efficiency, the continuous extruder is preferable. The processing using a kneader may be either continuous or batchwise.

There are no specific limitations to the type of the continuous extruder inasmuch as the machine can melt and knead the thermoplastic elastomer composition in the presence of the crosslinking agent. As examples, a uniaxial extruder, a biaxial extruder, and a biaxial rotor-type extruder can be given. Of these, the biaxial extruder and biaxial rotor-type extruder can be suitably used. L/D (the ratio of the effective screw length L to the outer diameter D) of the extruder is preferably 5 or more, and more preferably 10 to 60. As the biaxial extruder, although any biaxial extruder in which the two screws gear or do not gear can be used, a biaxial extruder in which the two screws gear while rotating in the same direction is preferred. As examples of such biaxial extruders, GT^{™} manufactured by Ikegai, Ltd., KTX^{™} manufactured by Kobe Steel, Ltd., TEX^{™} manufactured by The Japan Steel Works, Ltd., TEM^{™} manufactured by Toshiba Machine Co., Ltd., and ZSK^{™} manufactured by Werner & Pfleiderer Corp. can be given. As the biaxial rotor extruder, although any biaxial rotor extruder in which the two screws gear or do not gear can be used, a biaxial rotor extruder in which the two screws rotate in different directions and do not gear is preferred. As examples of such biaxial rotor extruder, CMI^{™} manufactured by The Japan Steel Works, and FCM^{™}, NCM^{™}, LCM^{™}, and ACM^{™}, all manufactured by Kobe Steel, Ltd., can be given.

As a method of supplying a plasticizer or extender oil to the continuous extruder when producing the thermoplastic elastomer composition, a method of previously mixing the plasticizer or extender oil with the thermoplastic resin (A) and elastomer (B) which are subjected to a crosslinking reaction using a mixer and feeding the mixture to a feed hopper of the continuous extruder or a method of directly supplying a barrel opening provided between the feed hopper and the die can be given, for example.

As a direct vent kneader, any kneader machine that can melt and knead the thermoplastic resin (A) and elastomer (B) in the presence of the crosslinking agent (C) can be used without specific limitation. As examples, a pressure kneader, a Banbury mixer, and a Blavendor mixer can be given.

The following first to third methods can be given as the method of kneading by using various apparatuses mentioned above.

### (First method)

A method of supplying components other than the crosslinking agent (C) to a direct vent kneader (a kneader, a Banbury mixer, etc.), kneading the mixture with heating, and palletizing the kneaded material using a feeder ruder or forming it into a sheet using a roll mill, followed by palletizing. The crosslinking agent (C) for dynamic crosslinking and, optionally, a crosslinking adjuvant, are added to the pellets and the mixture is supplied to a continuous kneader to dynamically crosslink the elastomer (B) while heating.

### (Second method)

A method of supplying all the raw-material components such as the thermoplastic resin (A), elastomer (B), and crosslinking agent (C) to a continuous extruder (a uniaxial extruder, a biaxial extruder, a biaxial rotor extruder, etc.) and dynamically crosslinking the elastomer (B) while heating.

### (Third method)

A method of providing two continuous extruders connected in series, supplying the thermoplastic resin (A), elastomer (B), and crosslinking agent (C) to a first continuous extruder, in which the thermoplastic resin (A) and elastomer (B) are kneaded in the presence of the crosslinking agent (C) while heating, and feeding the mixture at a stage in which the dynamic crosslinking reaction is not substantially proceeded to a second continuous extruder to cause the elastomer (B) to dynamically crosslink.

In this manner, the elastomer (B) is crosslinked in a state in which sufficiently fine particles of the elastomer (B) are dispersed in the thermoplastic resin (A), to produce a thermoplastic elastomer composition comprising the thermoplastic resin (A) in the form of a continuous phase (matrix) in which the fine particles of the elastomer (B) are dispersed in a stable manner. In such a thermoplastic elastomer composition, the diameter of the particles of the crosslinked acrylic rubber (elastomer) which is a dispersion phase is preferably 50 µm or less, and more preferably 1 to 10 µm.

The thermoplastic elastomer composition of this embodiment obtained in this manner has a good sea-island structure as a whole, has excellent cold resistance, and is useful as a substitute for an acrylic rubber. Therefore, taking the advantage of such excellent characteristics, the thermoplastic elastomer composition of this embodiment can be suitably used in the field of transportation machines such as vehicles, general machines and apparatuses, electronics and electricity, construction, and the like for producing molded articles such as sealing materials such as O-rings, oil seals, and bearing seals, CVJ boots, buffer and protective layers, wire covering materials, industrial belts, hoses, and sheets.

### EXAMPLES

The invention is described below in more detail by way of examples. Note that the invention is not limited to the following examples. In the examples, "part(s)" means "part(s) by weight" and "%" means "wt%" unless otherwise indicated.

### (Preparation of thermoplastic elastomer composition)

The following thermoplastic resins, acrylic rubbers, plasticizers, crosslinking agents, and other additives were used.

### <Thermoplastic resin (A) with a melting point of 200°C or higher>

A polybutylene terephthalate resin (PBT), DURANEX 500FP^{™} (MFR (235°C, 21N) = 23 g/10 min, Tm = 230°C)) manufactured by WinTech Polymer Ltd. was used.

### <Elastomer (B)>

Acrylic rubbers (ACM-1 to ACM-4) were prepared as the elastomer (B) having a unit derived from an ester group-containing monomer according to the following method.

### (ACM-1)

An autoclave of which the internal atmosphere was replaced with nitrogen was charged with 200 parts of ion-exchanged water, a monomer mixture consisting of 38.4 parts of butyl acrylate, 38.4 parts of methoxyethyl acrylate, 19.2 parts of methyl methacrylate, and 4.0 parts of dihydrodicyclopentenyloxyethyl acrylate, 4 parts of sodium laurate, 0.04 parts of p-menthane hydroperoxide, 0.01 parts of ferrous sulfate, 0.025 parts of sodium ethylenediaminetetraacetate, and 0.04 parts of sodium formaldehyde sulfoxylate. The monomers were polymerized by emulsion polymerization at a reaction temperature of 15°C. The copolymerization reaction was terminated by adding 0.5 parts ofN,N-diethylhydroxylamine when the polymerization conversion rate reached to about 100% (reaction time: 7 hours). The reaction product (latex) was removed. An aqueous solution of calcium chloride (0.25%) was added to the reaction product to coagulate an unsaturated group-containing acrylic rubber. After sufficiently washing, the resulting coagulated product was dried at about 90°C for 3 to 4 hours to obtain an acrylic rubber (ACM-1) having carbon-carbon double bonds on the side chain with a Mooney viscosity [MS₁₊₄ (100°C)] of 45.

### (ACM-2)

An autoclave of which the internal atmosphere was replaced with nitrogen was charged with 200 parts of ion-exchanged water, a monomer mixture consisting of 37.6 parts of butyl acrylate, 37.6 parts of methoxyethyl acrylate, 18.8 parts of methyl methacrylate, 2.0 parts of 2-hydroxyethyl (meth)acrylate, and 4.0 parts of dihydrodicyclopentenyloxyethyl acrylate, 4 parts of sodium laurate, 0.04 parts of p-menthane hydroperoxide, 0.01 parts of ferrous sulfate, 0.025 parts of sodium ethylenediaminetetraacetate, and 0.04 parts of sodium formaldehyde sulfoxylate. The monomers were polymerized by emulsion polymerization at a reaction temperature of 15°C. The copolymerization reaction was terminated by adding 0.5 parts of N,N-diethylhydroxylamine when the polymerization conversion rate reached to about 100% (reaction time: 7 hours). The reaction product (latex) was removed. An aqueous solution of calcium chloride (0.25%) was added to the reaction product to coagulate an unsaturated group-containing acrylic rubber. After sufficiently washing, the resulting coagulated product was dried at about 90°C for 3 to 4 hours to obtain an acrylic rubber (ACM-2) having carbon-carbon double bonds on the side chain with a Mooney viscosity [MS₁₊₄ (100°C)] of 45.

### (ACM-3)

An autoclave of which the internal atmosphere was replaced with nitrogen was charged with 200 parts of ion-exchanged water, a monomer mixture consisting of 38.2 parts of butyl acrylate, 38.2 parts of methoxyethyl acrylate, 0.5 parts of glycidyl methacrylate, 19.1 parts of methyl methacrylate, and 4.0 parts of dihydrodicyclopentenyloxyethyl acrylate, 4 parts of sodium laurate, 0.04 parts of p-menthane hydroperoxide, 0.01 parts of ferrous sulfate, 0.025 parts of sodium ethylenediaminetetraacetate, and 0.04 parts of sodium formaldehyde sulfoxylate. The monomers were polymerized by emulsion polymerization at a reaction temperature of 15°C. The copolymerization reaction was terminated by adding 0.5 parts of N,N-diethylhydroxylamine when the polymerization conversion rate reached to about 100% (reaction time: 7 hours). The reaction product (latex) was removed. An aqueous solution of calcium chloride (0.25%) was added to the reaction product to coagulate an unsaturated group-containing acrylic rubber. After sufficiently washing, the resulting coagulated product was dried at about 90°C for 3 to 4 hours to obtain an acrylic rubber (ACM-3) having carbon-carbon double bonds on the side chain with a Mooney viscosity [MS₁₊₄ (100°C)] of 47.

### (ACM-4)

An autoclave of which the internal atmosphere was replaced with nitrogen was charged with 200 parts of ion exchanged water, 100 parts of ethyl acrylate, 4 parts of sodium laurate, 0.04 parts of p-menthane hydroperoxide, 0.01 parts of ferrous sulfate, 0.025 parts of sodium ethylenediaminetetraacetate, and 0.04 parts of sodium formaldehyde sulfoxylate. The ethyl acrylate was polymerized by emulsion polymerization at a reaction temperature of 15°C. The copolymerization reaction was terminated by adding 0.5 parts of N,N-diethylhydroxylamine when the polymerization conversion rate reached to about 100% (reaction time: 7 hours). The reaction product (latex) was removed. An aqueous solution of calcium chloride (0.25%) was added to the reaction product to coagulate an unsaturated group-containing acrylic rubber. After sufficiently washing, the resulting coagulated product was dried at about 90°C for 3 to 4 hours to obtain an acrylic rubber (ACM-4) having carbon-carbon double bonds on the side chain with a Mooney viscosity [MS₁₊₄ (100°C)] of 47.

As an olefin/acrylate copolymer rubber, an ethylene-acrylic acid copolymer rubber ("Vemac G" manufactured by Mitsui du Pont Chemical Co., Ltd. (a terpolymer of 73 mol% of ethylenes, 26 mol% of methyl acrylate, and 1 mol% of carboxylic acid)) was used.

### <Crosslinking agent (C)>

The crosslinking agent (C) was synthesized by the following method.

A 11 pressure stirring vessel reactor equipped with an oil jacket was maintained at 225°C. A monomer mixture containing 38 parts of styrene, 28 parts of methyl methacrylate, 25 parts of glycidyl methacrylate, 8 parts of butyl acrylate, 10 parts ofxylilene as an aromatic solvent, and 2.5 parts of di-tert-butylperoxide as an initiator was prepared and stored in a raw material tank. The monomer mixture was continuously supplied from the raw material tank to the reactor at a constant feed rate (48 g/min, residence time: 12 min.), while continuously removing the reaction solution from the outlet port of the reactor so that a constant amount of the mixture (580 g) was maintained in the reactor. The internal temperature of the reactor was maintained at 235°C. The reaction product removed from the reactor was continuously processed by a membrane vaporizer at a temperature 250°C under a reduced pressure of 30 kPa to separate the volatile components and collect a copolymer which contains almost no volatile components. After starting supply of the monomer mixture, the reaction was deemed to have reached an equilibrium state 36 minutes after the time when the temperature inside the reactor was stabilized. The copolymer obtained after membrane vaporization was collected from this point of time for 180 minutes, while continuing the reaction. About 8 kg of the crosslinking agent (C) was collected. The polystyrene-reduced weight average molecular weight (Mw), number-average molecular weight (Mn), and molecular weight distribution (Mw/Mn) of the crosslinking agent (C) determined by gel permeation chromatography were respectively 11,500, 5,000, and 2.3. The amount of volatile components in the crosslinking agent (C) determined by gas chromatography was less than 1%. The glass transition temperature (Tg) was 70°C and the epoxide content was 1.8 meq/g.

### <Other additives>

As methyl hydrogen silicone, SH1107^{™} manufactured by Dow Corning Toray Silicone Co., Ltd. was used; as the organic peroxide crosslinking agent, 2,5-dimethyl-2,5-di(t-butylperoxy)hexyne-3 (Perhexyn 258-40^{™} manufactured by NOF Corporation) was used; as the crosslinking adjuvant, divinylbenzene (Divinylbenzene (56% product)^{™} manufactured by Sankyo Kasei Co., Ltd.) was used; and as the antioxidant, 4,4'-bis(α,α-dimethylbenzyl)diphenylamine (Nocrack CD^{™} manufactured by Ouchi Shinko Chemical Co., Ltd.) was used.

### (Example 1)

An additive mixture was obtained by mixing ACM-1, PBT, the crosslinking agent (C), and the antioxidant according to the formulation shown in Table 1 for 30 seconds using a Henschel mixer. Next, following the formulation shown in Table 1, the raw materials were charged to raw material inlet ports of a unidirectional rotating biaxial extruder (unidirectional non-gear screw, L/D = 49, TEX44αII^{™} manufactured by The Japan Steel Works, Ltd.) from two weight-type feeders (KF-C88^{™} manufactured by Kubota Corporation), one for feeding additive mixtures and the other for feeding the polybutylene terephthalate resin, at a feed rate of 40 kg/hr. The extruder was operated at a cylinder temperature of 230°C and a screw rotation of 400 rpm to effect the crosslinking reaction by dynamic heat treatment, thereby obtaining a thermoplastic elastomer composition.

### (Examples 2 to 5, Comparative Examples 1 and 2)

Thermoplastic elastomer compositions were obtained in the same manner as in Example 1 by using the formulations shown in Table 1.

### (Preparation of test specimen (molded sheet) of thermoplastic elastomer composition)

Pellets of the resulting thermoplastic elastomer compositions (Examples 1 to 5 and Comparative Examples 1 and 2) were molded by injecting from an injection molding machine (N-100^{™} manufactured by The Japan Steel Works, Ltd.) to obtain sheets with a thickness of 2 mm, a length of 120 mm, and a width of 120 mm to be used for various evaluations.

### (Evaluation of thermoplastic elastomer compositions)

The kneading properties of the resulting thermoplastic elastomer composition were measured using a kneader with a capacitance of 101. The flowability was measured as a melt flow rate (MFR) at 230°C and a load of 10 kg. The results are shown in Table 1. In addition, mechanical properties (surface hardness, tensile strength at break (TB), elongation at break (EB), etc.), oil resistance, heat resistance, and a compression set (at an ordinary temperature (25°C) and at 140°C) were measured and evaluated using sheets molded from the thermoplastic elastomer compositions. The results are shown in Table 1. As a heat resistance index, the heat distortion of the grip part of the jig of the measuring instrument was visually observed after the mechanical property evaluation at 140°C.

[Surface hardness (Duro D)]: Measured according to JIS-K6253.

[Tensile strength at break (TB) and elongation at break (EB)]: Measured according to JIS-K6251.

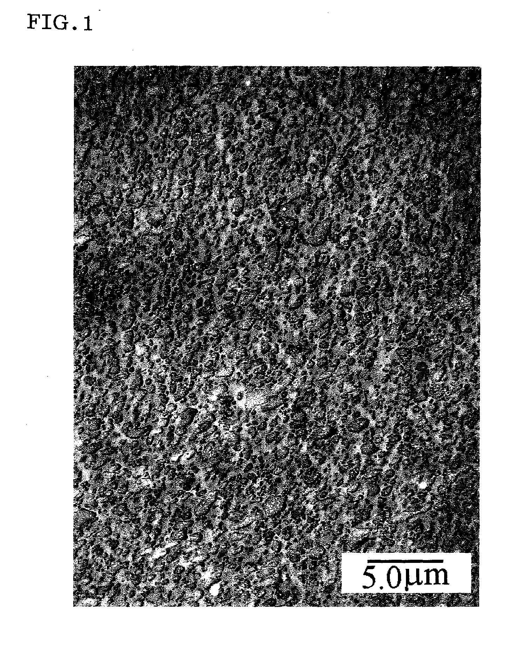

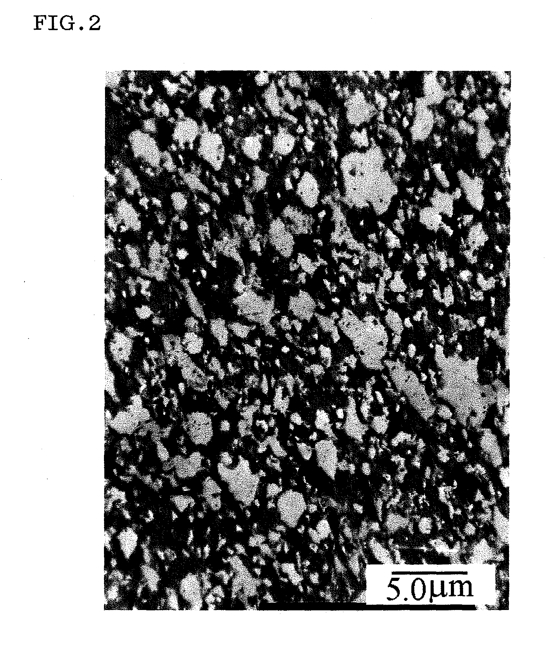

[TEM photograph] : Thin films were prepared from the thermoplastic elastomer compositions of Example 1 and Comparative Example 2 using a freeze microtome and dyed with ruthenium tetraoxide to take photographs using a transmission electron microscope (H-7500^{™} manufactured by Hitachi, Ltd.) at a magnification of 2,000. The electron microscope photograph showing the microstructure of the thermoplastic elastomer composition of Example 1 is shown in Figure 1. The electron microscope photograph showing the microstructure of the thermoplastic elastomer composition of Comparative Example 2 is shown in Figure 2. In Figure 1, the black to dark gray area indicates polybutylene terephthalate and the white to light gray area indicates acrylic rubber.

**Table 1**

| | | Example | | | | | Comparative Example | |
|---|---|---|---|---|---|---|---|---|
| | | 1 | 2 | 3 | 4 | 5 | 1 | 2 |
| | DURANEX 500FP | 50 | 50 | 50 | 50 | 50 | 50 | 50 |
| | ACM-1 | 50 | | | | | 50 | 50 |
| | ACM-2 | | 50 | | | | | |
| | ACM-3 | | | 50 | | | | |
| Formulation (parts by mass) | ACM-4 | | | | 50 | | | |
| | Vemac G | | | | | 50 | | |
| | Nocrack CD | 0.5 | 0.5 | 0.5 | 0.5 | 0.5 | 0.5 | 0.5 |
| | Crosslinking agent (C) | 2 | 2 | 2 | 2 | 2 | | |
| | SH1107 | | | 1 | 1 | | | |
| | Perhexyn 25B-40 | | | | | | | 1 |
| | Divinylbenzene | | | | | | | 0.5 |
| | MFR (230°C, 10 kg) | 18 | 13 | 15 | 21 | 32 | 11 | 124 |
| | Mechanical properties | | | | | | | |
| | Surface hardness D (-) hardness D | 64 | 61 | 63 | 63 | 57 | 65 | |
| | T_{B} (MPa) | 26.1 | 23.1 | 25.3 | 24.0 | 18.0 | 18.2 | 18.9 |
| Properties | EB (%) | 150 | 110 | 210 | 130 | 130 | 140 | 200 |
| | Mechanical 140°C Mechanical properties | | | | | | | |
| | T_{B} (MPa) | 9.8 | 8.6 | 9.7 | 9.7 | 6.8 | 5.5 | 6.9 |
| | E_{B}(%) | 170 | 130 | 110 | 110 | 100 | 90 | 180 |
| | Heat distortion of gripping part | None | None | None | None | None | Distorted | None |

It can be understood from the results shown in Table 1 that the thermoplastic elastomer composition of Example 1 possessed higher strength and better heat resistance than the thermoplastic elastomer compositions of Comparative Examples 1 and 2. The thermoplastic elastomer composition of Comparative Example 1 had poor machine properties and heat resistance, because the composition was not crosslinked. The thermoplastic elastomer composition of Comparative Example 2 crosslinked with an organic peroxide exhibited poor mechanical properties due to breakage of molecules by the organic peroxide. These results confirmed the utility of the thermoplastic elastomer composition of this embodiment of the present invention. The electron microscope photograph of Example 1 shown in Figure 1 clearly indicates that the thermoplastic elastomer composition of this embodiment of the present invention has a sea-island structure (consisting of the sea (matrix) of the polybutylene terephthalate resin (matrix) and islands of crosslinked acrylic rubber particles (domains)) in which the acrylic rubber crosslinked particles with a diameter of 3 µm or less are homogeneously distributed. On the other hand, it is clear from the electron microscope photograph shown in Figure 2 that although the composition of Comparative Example 2 has a sea island structure, the diameter of the crosslinked acrylic rubber particles is not uniform and there are many larger particles with a diameter of 3 µm or more.

### INDUSTRIAL APPLICABILITY

Since the thermoplastic elastomer composition of the present invention has high strength and excellent rubber elasticity, heat resistance, and oil resistance, the composition is suitable as a material for forming components such as CVJ boots.

## Claims

1. A thermoplastic elastomer composition obtained by dynamically heat-treating a mixture containing a thermoplastic resin (A) having a melting point of not less than 200°C and an elastomer (B) having a constitutional unit derived from an ester group-containing monomer in the presence of, as a crosslinking agent (C), a polymer (C-1) which consists of a (meth)acrylate (c-1) unit having a weight average molecular weight (Mw) of 1,000 to 30,000 and a molecular weight distribution (Mw/Mn) of 1.0 to 4.0 and/or a polymer (C-2) which comprises 5 to 35 mass% of the (meth)acrylate (c-1) unit and 65 to 95 mass% of an aromatic vinyl monomer (c-2) unit, the polymer (C-2) having a weight average molecular weight (Mw) of 1,000 to 30,000 and a molecular weight distribution (Mw/Mn) of 1.0 to 4.0.

2. The thermoplastic elastomer composition according to claim 1, wherein the thermoplastic resin (A) is at least one polymer selected from the group consisting of a polyester resin, a polyamide resin, and a polyester elastomer.

3. The thermoplastic elastomer composition according to claim 1 or 2, wherein the elastomer (B) is at least one rubber selected from the group consisting of an acrylic rubber, an acrylonitrile-acrylic rubber, and an ethylene acrylic rubber.

4. The thermoplastic elastomer composition according to any one of claims 1 to 3, wherein the elastomer (B) comprises 20 to 99.99 mass% of a constitutional unit (B1) derived from an alkyl acrylate monomer and/or an alkoxyalkyl acrylate monomer, 0.01 to 20 mass% of a constitutional unit (B2) derived from a monomer having a carbon-carbon double bond in the side chain, 0 to 40 mass% of a constitutional unit (B3) derived from an unsaturated acrylonitrile monomer, and 0 to 30 mass% of a constitutional unit (B4) derived from a monomer copolymerizable with these monomers, provided that (B1) + (B2) + (B3) + (B4) =100 mass%.

5. The thermoplastic elastomer composition according to any one of claims 1 to 4, wherein the elastomer (B) is a carboxylated elastomer, a hydroxylated elastomer, an aminated elastomer, or an epoxidized elastomer.

6. The thermoplastic elastomer composition according to any one of claims 1 to 5, wherein the ratio by mass of the thermoplastic resin (A) and the elastomer (B) is A:B = 60:40 to 15:85.

7. The thermoplastic elastomer composition according to any one of claims 1 to 6, wherein the (meth)acrylate (c-1) contains glycidyl methacrylate.

8. The thermoplastic elastomer composition according to any one of claims 1 to 7, wherein the epoxide content of the crosslinking agent (C) is 0.1 to 20 meq/g.

9. The thermoplastic elastomer composition according to any one of claims 1 to 8, wherein the mixture which is dynamically treated with heat further comprises methyl hydrogen silicone oil.

10. The thermoplastic elastomer composition according to any one of claims 1 to 9, further comprising 0 to 50 mass% of a plasticizer selected from the group consisting of an ether-based plasticizer, an ether ester-based plasticizer, and a trimellitic acid-based plasticizer.

11. A formed article made from the thermoplastic elastomer composition according to any one of claims 1 to 10.

12. A constant velocity joint (CVJ) boot made from the thermoplastic elastomer composition according to any one of claims 1 to 10.

13. A method for producing a thermoplastic elastomer composition comprising dynamically heat-treating a mixture containing a thermoplastic resin (A) having a melting point of not less than 200°C and an elastomer (B) having a constitutional unit derived from an ester group-containing monomer in the presence of, as a crosslinking agent (C), a polymer (C-1) which consists of a (meth)acrylate (c-1) unit having a weight average molecular weight (Mw) of 1,000 to 30,000 and a molecular weight distribution (Mw/Mn) of 1.0 to 4.0 and/or a polymer (C-2) which comprises 5 to 35 mass% of the (meth)acrylate (c-1) unit and 65 to 95 mass % of an aromatic vinyl monomer (c-2) unit, the polymer (C-2) having a weight average molecular weight (Mw) of 1,000 to 30,000 and a molecular weight distribution (Mw/Mn) of 1.0 to 4.0.

14. The method for producing a thermoplastic elastomer composition according to claim 13, wherein the mixture is dynamically treated with heat using a continuous kneader and/or a continuous extruder.
